Europäisches Patentamt

European Patent Office

Office européen des brevets

(11) Publication number: **0 180 551**
**A2**

# EUROPEAN PATENT APPLICATION

(21) Application number: **85830102.1**

(22) Date of filing: **30.04.85**

(51) Int. Cl.⁴: **A 01 B 49/02,** A 01 B 13/08

(30) Priority: **22.10.84 IT 4351684**

(43) Date of publication of application: **07.05.86**
**Bulletin 86/19**

(84) Designated Contracting States: **AT BE CH DE FR GB LI
NL SE**

(71) Applicant: **O.T.M.A. S.p.A., S.S. Tiberina 3/bis,
I-06018 Trestina di Citta' di Castello (PG) (IT)**

(72) Inventor: **Renzacci, Mario, Via Marzabotto, 2,
I-06012 Citta' di Castello (PG) (IT)**

(74) Representative: **Mascioli, Alessandro, Prof.Dr., c/o
A.N.D.I. Associazione Nazionale degli Inventori Via
Lima, 35, I-00198 Roma (IT)**

(54) **An agricultural machine for breaking and overturning the soil.**

(57) A subsoiler machine that in one single passage breaks
and overturns the soil in its surface by means of concave
overturning disks 4 and breaks the soil in depth by means of
subsoiler points 7 placed immediately behind each disk 4,
and that helps diminishing the tractive effort necessary for
the advancing thereof by means of the rotatory movement of
said disks.

"AN AGRICULTURAL MACHINE FOR BREAKING AND OVERTURNING THE SOIL"

OTMA S.p.A.

ITALY

The present invention concerns an agricultural machine for breaking and overturning the soil.

A great variety of agricultural machines for breaking and overturning the soil are well known in the art, and may substantially be devided into two big classes: the one of the plows that cut and overturn a more or less deep layer of soil and that may substantially be of the kind of the bottom plows or of the kind of the concave disk plows, and the class of the subsoiler plows, that break the soil in depth without overturning it.

Each of said instruments shows inconveniences and limitations: the plows infact cut the soil in a clear way thus introducing a horizontal discontinuity between treated and non-treated soil, which will be an obstacle for the penetration of the roots, for the water and air circulation and for the drainage; said discontinuity may become a real compact and impenetrable barrier due to the further solidification action performed by one wheel of the tractor that, while plowing, oftenly is in the furrow.

Furthermore, the plows do perform a total overturning action, i.e. they overturn all the soil they cut; this means that treatments in depth may not be effected if the surface soil is not brought to the depth and the soil in depth brought to the surface, while this last is not particularly suited for cultivation.

The subsoilers break the soil without introducing horizontal barriers creating the best conditions for the roots, for the water and air circulation and for the drainage, but they do not overturn the soil and need a greater tractive effort.

Furthermore, none of these machines is able to operate when the soil is sucked with water as on one hand, due to the greater cohesion, there is a greater resistance to penetration and, on the other hand and at the same time, due to the greater slippery thereof, there is a reduction of the adherence of the tractor wheels of the tractors.

These inconveniences and limitations cause - if a well treated soil is to be obtained, i.e. broken in depth without horizontal barriers and broken and overturned in the surface - the workmen will have to perform a plurality of following operations with different machines with a great waste of time, work and energy, and only when the weather conditions allow it, i.e. when the soil is dry.

The overturning subsoiler machine, object of the present invention, completely overcomes all above mentioned inconveniences and limitations.

As it is shown in the claims, said machine is able - in one single work passage - to break and overturn the surface soil by means of concave overturning disks, and to break the soil in depth by means of subsoiler points placed immediately behind each disk and projecting below the same; said points are working in the furrow cut by each disk before said furrow will be filled by the earth moved by the following disk, and so on one hand they work with the minimum energy, as while treating the soil below the one treated by said disks said points only meet the resistance of the soil layer they have to break and not also the one of the surface soil; and on the other hand being the trail of said points covered by the earth moved by the disks there will be no trace left on the surface.

The machine according to the present invention is working with the minimum tractive effort, due to the fact that said disks are moving by a self-rotation fed by the tractor's motor or by any other engine, and act on a not jet treated soil, which means that the machine according to the present invention is also able to operate on soils with a very high cohesion and particularly little suited for traction - like a wet soil.

The subsoiler points are removable so as to allow the use of the machine without the same, should a traditional plowing be sufficient; furthermore, they are adjustable so as to vary the working according to the needs, and provided with security couplings that disengage when in presence of too great efforts being dangerous for the safety of the machine, as e.g. an impact with rocks or similar.

The advantages obtained by the machine for breaking and overturning the soil being object of the present invention are the following: a perfect agronomic preparation of the soil with one single working passage with a great time, work and energy saving; the fact of being inde - pendant from the weather conditions; the possibility of acting without the wheels of the tractor passing onto the treated soil; and a high safety degree against the turnover during the treatment of inclined soils, due to hooking effect of the subsoiler points.

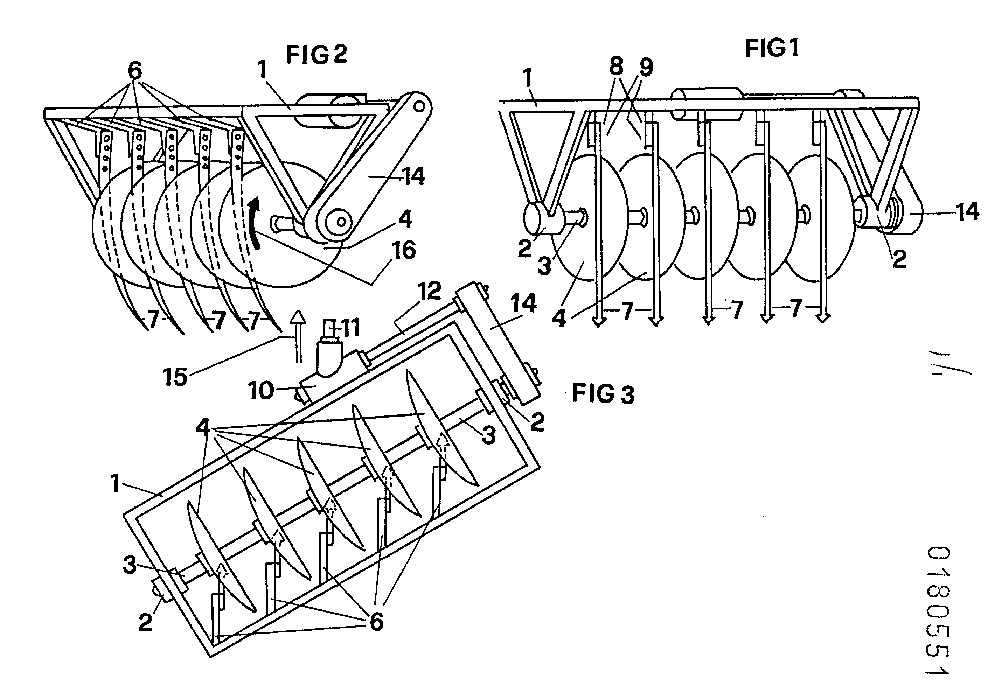

The object of the present invention is shown, in a preferred embodiment, in the enclosed drawing in figures 1, 2 and 3, respectively showing ortographic projections of front, profile and top views.

Relating to the details of the figures, 1 shows the frame of the machine provided with supports 2 in which shaft 3 is rotating, said shaft being out of one piece with a plurality of concave overturning disks 4, shown in the number of five in this drawing; to said frame 1, subsoiler points (here shown in the number of five) 7 are fixed by means of couplings 6, whereby said subsoiler points will perform the deep overturning and are placed immediately behind each disk 4 and projecting below the same and fixed to supports 6 in an adjustable and removable way with safety bolts 8 with predetermined rupture and with normal bolts 9.

The gear box 10, at one or more speeds, is fixed to frame 1, said gear box being provided with an inlet shaft 11 that will receive motion from the power take-off of the tractor, and provided with an outlet shaft 12 that in turn communicates the motion to the gear box 14, at one or more speeds, that in turn will transmit the motion to shaft 3 and therefore to disks 4.

In figure 3, the advancing direction and the sense 15 of the machine on the soil under the taw are shown.

In figure 2 the rotation sense 16 of disks 4 is shown; in the figures the devices for the hooking for the taw, the devices for adjusting the height and for the trim, the devices for scraping the disks having also the

- 6 -

function of helping the overturning, the direction wheel and the compensating push wheels, that are always present in this kind of machines and of which many kinds suited for this purpose are well known, as well as other optional devices, like refining harrows, grader rolls, seeders, fertilizer distributors, spreaders of products for the treatment of the soil of which also many kinds suited for this purpose are well known, are not shown because they are not determining for the aim of the present invention.

In a possible variant, for particular cultivation requests, the subsoiler points may be placed behind the disks at a certain distance so that said points may also meet the already overturned soil; in another embodiment that will satisfy particular cultivation requests, said subsoiler points may be placed in front of the disks so as to perform the breaking before the overturning.

In a possible variant the subsoiler points instead of being fixed with safety bolts, are fixed with other safety means of any well known kind able to disengage under the action of excessive efforts.

In a possible variant disks 4 instead of having smooth edges as it is shown in the drawing, may have toothed edges so as to increase the breaking effect of the soil and for increasing the hold and therefore the push effect performed by the disks due to the rotation movement thereof.

CLAIMS

1. An agricultural machine for breaking and overturning the soil, characterized in the presence of concave overturning disks (4) and of subsoiler points (7) placed immediately behind each overturning disk and pro - jecting below the same for performing overturning in depth.

2. An agricultural machine according to claim 1, characterized in that subsoiler points (7) are removable for a traditional plowing.

3. An agricultural machine according to claim 1, characterized in that subsoiler points (7) are adjustably fixed so as to vary the depth of working.

4. An agricultural machine according to claim 1, characterized in that subsoiler points (7) are fixed with safety means, like predetermined rupture bolts (8), that disengage under the action of excessive efforts.

5. An agricultural machine according to claim 1, characterized in that subsoiler points (7) are placed behind disks (4) at a certain distance so as to meet the already broken soil.

6. An agricultural machine according to claim 1, characterized in that subsoiler points (7) are placed in front of disks (4) for performing the breaking before teh overturning.

0180551

- 2 -

7. An agricultural machine according to claim 1, characterized in that the overturning disks (4) are provided with a self-rotation movement fed by the tractor's motor through the gear box (10), the traction box (14) and the shaft (3).

8. An agricultural machine according to claim 1, characterized in that the overturning disks (4) are provided with a self-rotation movement fed by a suited motor.

9. An agricultural machine according to claim 1, characterized in that overturning disks (4) have toothed edges for increasing the breaking effect of the soil and for increasing the hold and the push effect performed by said disks due to the rotation movement thereof.